# EUROPEAN PATENT APPLICATION

(11) **EP 1 770 962 A1**
(43) Date of publication of application: **04.04.2007**
(21) Application number: 06121386.4
(22) Date of filing: 27.09.2006
(51) Int. Cl.: H04L 29/08, H04L 29/12

(54) **Method and apparatus for providing internet protocol connectivity without consulting a domain name sytem server**

(30) Priority: 30.09.2005 US 240673
(71) Applicant: AT&T Corp., New York, NY 10013-2412 (US)
(72) Inventor: Croack, Marian, Fair Haven, NJ New Jersey 07704 (US); Eslambochl, Hossein, Los Altos Hills, CA California 94022 (US)
(74) Representative: Harding, Richard Patrick

(57) **Abstract**

A method and apparatus for enabling a packet network provider, e.g., a VoIP network provider to cache the IP address of the VoIP network entry point into a configuration file that can be downloaded to VoIP endpoint devices on a periodic basis are disclosed. Therefore, users of the VoIP services will be able to access the VoIP network despite DNS server failures that may be occurring in the broadband access networks.

## Description

The present invention relates generally to communication networks and, more particularly, to a method and apparatus for providing Internet Protocol connectivity without consulting Domain Name System (DNS) server in communication networks, e.g., packet networks such as Voice over Internet Protocol (VoIP) networks.

### BACKGROUND OF THE INVENTION

Broadband service providers occasionally experience outages involving their Domain Name System (DNS) server. Under these circumstances, even though complete IP network connectivity exists, users often cannot access the Internet because an endpoint device cannot resolve a domain name into the correct corresponding IP address associated with a Universal Resource Locator (URL) or fully qualified name. For users of VoIP services when DNS outages occur, the users often will not be able to access subscribed VoIP services because a VoIP endpoint device is unable to resolve the domain name into an IP address to gain access to the VoIP network.

Therefore, a need exists for a method and apparatus for providing IP connectivity without consulting a DNS server in a packet network, e.g., a VoIP network.

### SUMMARY OF THE INVENTION

In one embodiment, the present invention enables a packet network provider, e.g., a VoIP network provider to cache the IP address of the VoIP network entry point into a configuration file that can be downloaded to VoIP endpoint devices on a periodic basis. Therefore, users of the VoIP services will be able to access the VoIP network despite DNS server failures that may be occurring in the broadband access networks. When a VoIP provider reconfigures its network and changes the IP addresses of a VoIP network entry point, the present invention enables the VoIP provider to update the configuration file with a new network entry point IP address for accessing the network. The configuration file will be downloaded to the VoIP endpoint device when such an update occurs.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of enabling Internet Protocol connectivity without consulting Domain Name System server in a VoIP network of the present invention;

FIG. 3 illustrates a flowchart of a method for enabling Internet Protocol connectivity without consulting Domain Name System server in a VoIP network of the present invention; and

FIG. 4 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

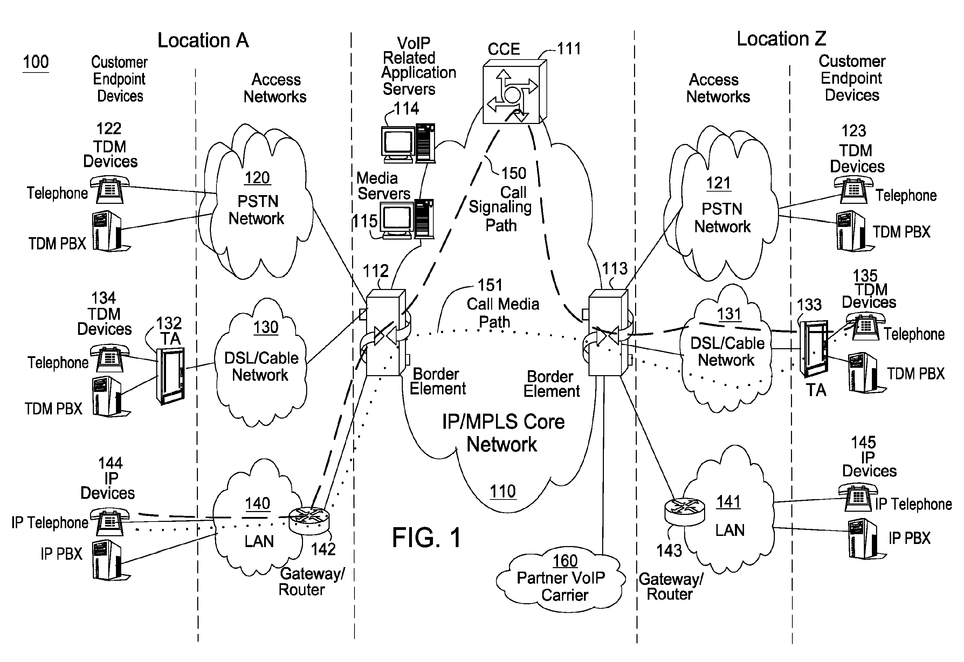

To better understand the present invention, FIG. 1 illustrates an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VolP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and 145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, VoIP related Application Servers (AS)114, and Media Server (MS) 115. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related Application Servers (AS) in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VolP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related application server 114 to obtain the information to complete this call. In one embodiment, the Application Server (AS) functions as a SIP back-to-back user agent. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP 200 OK response message if SIP is used, is sent in the reverse direction back to the CCE 111. After the CCE 111 receives the call acknowledgement message, it will then send a call acknowledgement signaling message, such as a SIP 200 OK response message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, teleconference bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Broadband service providers occasionally experience outages involving their Domain Name System (DNS) server. Under these circumstances, even though complete IP network connectivity exists, users often can not access the Internet because an endpoint device cannot resolve a domain name into the correct corresponding IP address associated with a Universal Resource Locator (URL) or fully qualified name. For users of VoIP services when DNS outages occur, the users often will not be able to access subscribed VoIP services because a VoIP endpoint device is unable to resolve the domain name into an IP address to gain access to the VoIP network. A DNS server is a system that translates Internet domain names into corresponding IP addresses. A domain name is an alphanumeric representation, such as "att.com", that uniquely identifies a system connected to the Internet. A URL is a string of characters, such as http://www.att.com, that represents the location or address of a resource on the Internet using the domain name format.

To address this criticality, the present invention enables a packet network provider, e.g., a VoIP network provider to cache the IP address of the VoIP network entry point into a configuration file that can be downloaded to VoIP endpoint devices on a periodic basis. Therefore, users of the VoIP services will be able to access the VoIP network despite DNS server failures that may be occurring in the broadband access networks. When a VoIP provider reconfigures its network and changes the IP addresses of a VoIP network entry point, the present invention enables the VoIP provider to update the configuration file with a new network entry point IP address for accessing the network. The configuration file will be downloaded to the VoIP endpoint device when such an update occurs.

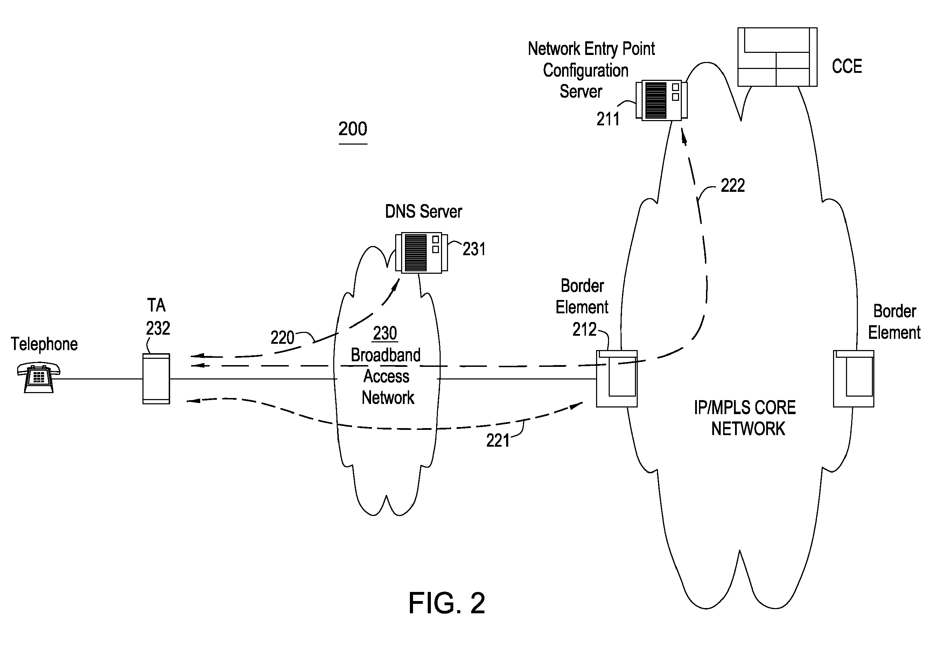

FIG. 2 illustrates an exemplary communication architecture for providing Internet Protocol connectivity without consulting Domain Name System server in a packet network, e.g., a VoIP network of the present invention. In FIG. 2, TA 232 receives periodic downloads of a configuration file that contains the IP address of the VoIP network entry point from network entry point configuration server 211 via data flow 222. From time to time, TA 232 also receives on-demand the configuration file containing the IP address of the VoIP network entry point from network entry point configuration server 211 via data flow 222. The network entry point IP address provided by the configuration file will be cached and used when DNS lookup operations fail. Under normal operating conditions, TA 232 is a VoIP endpoint device that uses DNS server 231 supported by broadband access network 230 to resolve domain names into corresponding IP addresses to access the Internet using data flow 220. However, when DNS server 231 fails and cannot be reached by TA 232, TA 232 uses the cached VoIP network entry point IP address to access the VoIP network. In particular, TA 232 uses the cached IP address of BE 212 in order to gain entry to the VoIP network and services using data flow 221. When DNS server 231 becomes available again, TA 232 will then use DNS server 231 to resolve a domain name into a corresponding IP address to access the VoIP network using BE 212.

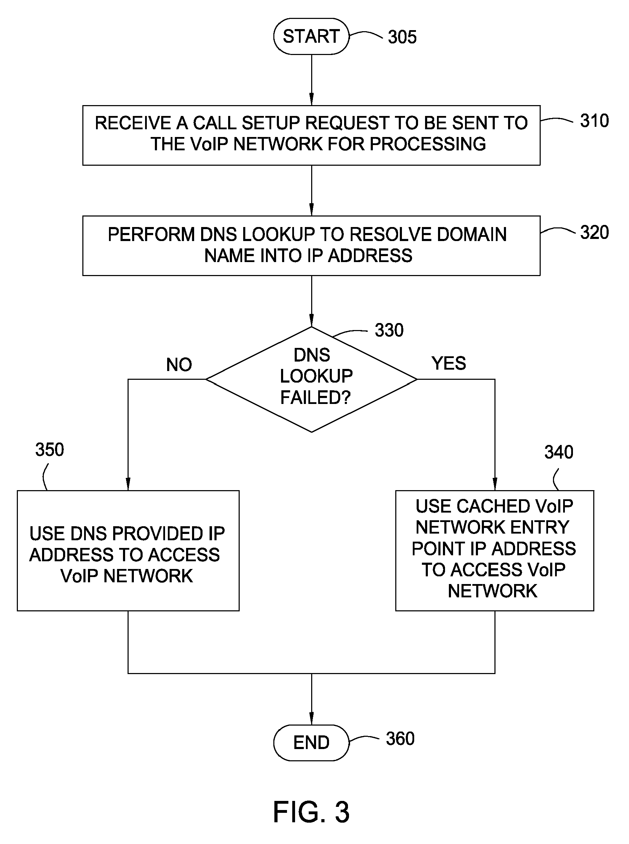

FIG. 3 illustrates a flowchart of a method 300 for enabling Internet Protocol connectivity without consulting Domain Name System server in a packet network, e.g., a VoIP network of the present invention. The method is executed by a VoIP endpoint device, such as a TA, an IP based telephone, or a customer premise based VoIP gateway. Method 300 starts in step 305 and proceeds to step 310.

In step 310, the method receives a call setup request to be sent to the VoIP network for processing.

In step 320, the method performs DNS lookup to resolve the domain name of the network entry point of the VoIP network into a corresponding IP address.

In step 330, the method checks if the DNS lookup operation has failed. If the DNS lookup operation fails, the method proceeds to step 340; otherwise, the method proceeds to step 350.

In step 340, the method uses the cached VoIP network entry point IP address to access the VoIP network.

In step 350, the method uses the IP address returned by the DNS lookup to access the VoIP network. The method ends in step 360.

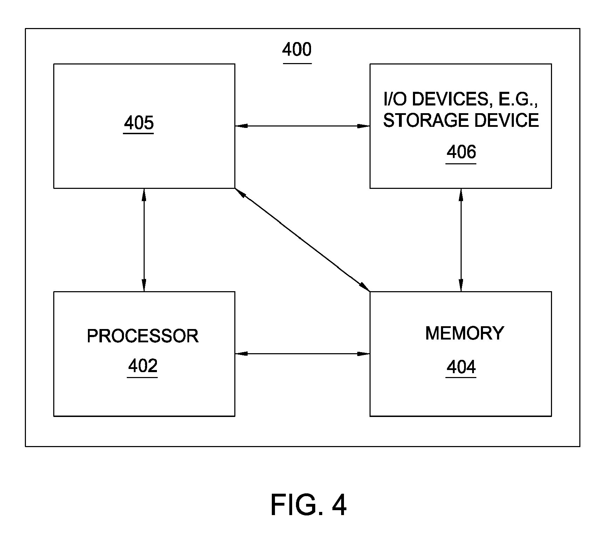

FIG. 4 depicts a high level block diagram of a general purpose computer suitable for use in performing the functions described herein. As depicted in FIG. 4, the system 400 comprises a processor element 402 (e.g., a CPU), a memory 404, e.g., random access memory (RAM) and/or read only memory (ROM), a module 405 for providing IP connectivity without consulting DNS server, and various input/output devices 406 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present module or process 405 for providing IP connectivity without consulting DNS server can be loaded into memory 404 and executed by processor 402 to implement the functions as discussed above. As such, the present process 405 for providing IP connectivity without consulting DNS server (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for providing Internet Protocol connectivity in a communication network, comprising:
creating a call setup message to be sent to said communication network to establish a call for an endpoint device;
contacting a Domain Name System, DNS, server to perform a DNS lookup for resolving a network entry point domain name into a corresponding IP address; and
using a cached network entry point IP address to access an entry point of said communication network if said DNS lookup is unsuccessful.

2. The method of claim 1, wherein said communication network is a Voice over Internet Protocol, VoIP, network or a Service over Internet Protocol, SoIP, network.

3. The method of claim 1 or 2, wherein said endpoint device comprises a Voice over Internet Protocol, VoIP, Terminal Adaptor, TA, a VolP based telephone, or a customer premise based VoIP gateway.

4. The method of claim 1, 2 or 3, wherein said cached network entry point IP address is stored in a configuration file in said endpoint device, and preferably said configuration file is sent by said communication network to said endpoint device on a periodic basis or on an on demand basis.

5. The method of any one of the preceding claims, further comprising:
using said IP address returned by said DNS server to access an entry point of said communication network.

6. The method of any one of the preceding claims, wherein said Domain Name System, DNS, server is deployed on an access network that is in communication with said communication network.

7. A computer-readable medium having stored thereon a plurality of instructions, the plurality of instructions including instructions which, when executed by a processor, cause the processor to perform the steps of the method of any one of the preceding claims.

8. An apparatus for providing Internet Protocol connectivity in a communication network, comprising:
means for creating a call setup message to be sent to said communication network to establish a call for an endpoint device;
means for contacting a Domain Name System, DNS, server to perform a DNS lookup for resolving a network entry point domain name into a corresponding IP address; and
means for using a cached network entry point IP address to access an entry point of said communication network if said DNS lookup is unsuccessful.

9. The apparatus of claim 8, wherein said communication network is a Voice over Internet Protocol, VoIP, network or a Service over Internet Protocol, SoIP, network.

10. The apparatus of claim 8 or 9, wherein said endpoint device comprises a Voice over Internet Protocol, VoIP, Terminal Adaptor, TA, a VoIP based telephone, or a customer premise based VoIP gateway.

11. The apparatus of claim 8, 9 or 10, wherein said cached network entry point IP address is stored in a configuration file in said endpoint device, and preferably said configuration file is sent by said communication network to said endpoint device on a periodic basis or on an on demand basis.

12. The apparatus of any one of claims 8 to 11, wherein said Domain Name System, DNS, server is deployed on an access network that is in communication with said communication network.
